# DEMANDE DE BREVET EUROPEEN

(11) **EP 0 903 284 A1**
(43) Date de publication de la demande: **24.03.1999**
(21) Numéro de dépôt: 98402310.1
(22) Date de dépôt: 18.09.1998
(51) Int. Cl.: B62D 25/16, F16B 5/06

(54) **Dispositif pour la fixation d'une aile sur un châssis**

(30) Priorité: 22.09.1997 FR 9711743
(71) Demandeur: Heriveau, Philippe, 35600 Bains sur Oust (FR)
(72) Inventeur: Heriveau, Philippe, 35600 Bains sur Oust (FR)
(74) Mandataire: Dawidowicz, Armand

(57) **Abrégé**

L'invention concerne un dispositif pour la fixation d'une aile (1) sur le châssis (2) d'un véhicule, de préférence tracté, ce châssis (2) étant équipé d'au moins deux organes (3) de support (4) d'aile, disposés transversalement aux longerons du châssis, et s'étendant au dessus, ou au voisinage de la roue du véhicule.

Ce dispositif est caractérisé en ce qu'il comprend au moins une platine (4) apte à s'appliquer sur la face externe de l'aile (1), cette platine étant munie d'une part, de perçage(s) (5) pour le passage d'organes (6) de fixation de la platine (4) à l'aile (1) du véhicule, d'autre part, d'une pince (7) à ressort élastique formant clip pour permettre la fixation de la platine (4) à l'organe (3) de support d'aile solidaire du châssis (2) par simple déformation élastique autour dudit organe (3) de support d'aile.

## Description

La présente invention concerne un dispositif pour la fixation d'une aile sur le châssis d'un véhicule, de préférence tracté, tel qu'une remorque.

Elle concerne plus particulièrement un dispositif pour la fixation d'une aile sur un véhicule dont le châssis est équipé d'au moins deux organes de support d'aile, tels que des tubes, s'étendant transversalement aux longerons du châssis et solidarisés à ce dernier.

Des dispositifs pour la fixation d'ailes sur le châssis de véhicules tractés sont déjà connus. Ces dispositifs nécessitent, comme dans le cadre de la présente invention, la présence sur le châssis d'au moins deux organes de support d'aile généralement formés par des tubes de section ronde ou carrée fixés sur les longerons du châssis, perpendiculairement à ce dernier et s'étendant, au-dessus, ou au voisinage, de chaque roue.

Ces dispositifs peuvent être constitués de colliers formés d'au moins deux parties complémentaires qui, à l'état assemblé, entourent l'organe de support d'aile solidaire du châssis, l'une des parties du collier étant prolongée par deux branches opposées servant à la fixation de cette partie de collier à l'aile, par vissage au moyen de vis et d'écrous.

Un dispositif similaire est constitué d'une plaque de fixation et d'une contre-plaque pourvues chacune de perçages, au moins l'une des plaques étant conformée pour épouser, à l'état assemblé des plaques, le profil de l'organe de support d'aile solidaire du châssis, l'autre plaque étant fixée à l'aile au moyen d'organes de fixation tels qu'un ensemble vis-écrous. Ces deux dispositifs présentent les mêmes inconvénients. En effet, ils nécessitent d'une part un temps de préparation de l'aile qui consiste en un perçage de cette dernière au moyen de gabarits, d'autre part un temps de montage long et la présence de deux opérateurs, l'un des opérateurs portant l'aile pendant que l'autre assujettit l'aile au châssis par vissage des différents organes de fixation sur l'organe de support d'aile solidaire du châssis d'une part et sur l'aile d'autre part. En effet, du fait de l'assemblage simultané du dispositif de fixation à la fois sur l'aile et sur l'organe de support solidaire du châssis, la présence de ces deux opérateurs est nécessaire. Un autre inconvénient de ces dispositifs de fixation est qu'ils sont généralement réalisés en métal. En conséquence, ils sont lourds. En outre, du fait de leur conception, ils sont encombrants. Enfin, un autre inconvénient de ces dispositifs est qu'ils ne permettent pas un réglage du positionnement angulaire de l'aile par rapport à la roue, une fois le dispositif de fixation installé sur les organes de support d'aile solidaires du châssis. Il en résulte une impossibilité d'adapter le positionnement de l'aile par rapport à la roue notamment en fonction de la suspension utilisée. Enfin, ces dispositifs de fixation ne permettent en aucun cas, une fois l'aile pré-percée, une modification du positionnement du dispositif de fixation dans le cas où les organes de support d'aile solidaires du châssis ne seraient pas écartés de la distance réglementaire.

Un premier but de l'invention est donc de proposer un dispositif pour la fixation d'une aile sur le châssis d'un véhicule, de préférence tracté, dont la conception permet de s'exempter de la présence de deux opérateurs au moment du montage de l'aile sur ledit châssis.

Un autre but de la présente invention est de proposer un dispositif pour la fixation d'une aile sur le châssis d'un véhicule tracté dont le poids et l'encombrement sont réduits et dont la conception permet le montage sur des châssis équipés d'organes de support d'aile d'écartements différents.

A cet effet, l'invention a pour objet un dispositif pour la fixation d'une aile sur le châssis d'un véhicule, de préférence tracté, tel qu'une remorque, ce châssis étant équipé d'au moins deux organes de support d'aile, tels que des tubes, disposés transversalement aux longerons du châssis et s'étendant au-dessus, ou au voisinage, de la roue du véhicule, caractérisé en ce qu'il comprend au moins une platine apte à s'appliquer sur la face externe de l'aile, cette platine étant munie d'une part de perçage(s) pour le passage d'organes, tels que des vis, de fixation de la platine à l'aile du véhicule, d'autre part d'une pince à ressort élastique formant clip agencée pour permettre la fixation de la platine à l'organe de support d'aile solidaire du châssis par simple déformation élastique autour dudit organe de support d'aile.

Selon une forme de réalisation préférée de l'invention, la pince à ressort de la platine comporte des branches présentant, à leurs extrémités libres respectives, un guide d'entrée sous forme de pans inclinés à allure divergente en direction de l'entrée de la pince de manière à ce que, sous l'action d'une poussée, les branches s'écartent au passage d'insertion de l'organe support d'aile solidaire du châssis et se resserrent élastiquement autour dudit organe support d'aile.

L'invention a encore pour objet une aile destinée à être fixée à un châssis d'un véhicule de préférence tracté, tel qu'une remorque, au moyen du dispositif de fixation précité, cette aile comportant au moins quatre inserts délimitant respectivement un taraudage pour la réception d'un organe de fixation de la platine du dispositif de fixation à l'aile.

L'invention concerne enfin un procédé de montage d'une aile, du type précité, sur un châssis d'un véhicule tracté au moyen d'un dispositif de fixation, tel que décrit ci-dessus, caractérisé en ce qu'on fixe par déformation élastique au moins une platine sur chaque organe de support d'aile solidaire du châssis puis on solidarise l'aile à chaque platine par vissage.

L'invention sera bien comprise à la lecture de la description suivante d'un exemple de réalisation, en référence aux dessins annexés dans lesquels :
la figure 1 représente une vue schématique partielle en perspective à l'état non assemblé d'un dispositif pour la fixation d'une aile sur un châssis ;
la figure 2 représente une vue longitudinale en coupe du dispositif pour la fixation de l'aile au châssis représenté à la figure 1.

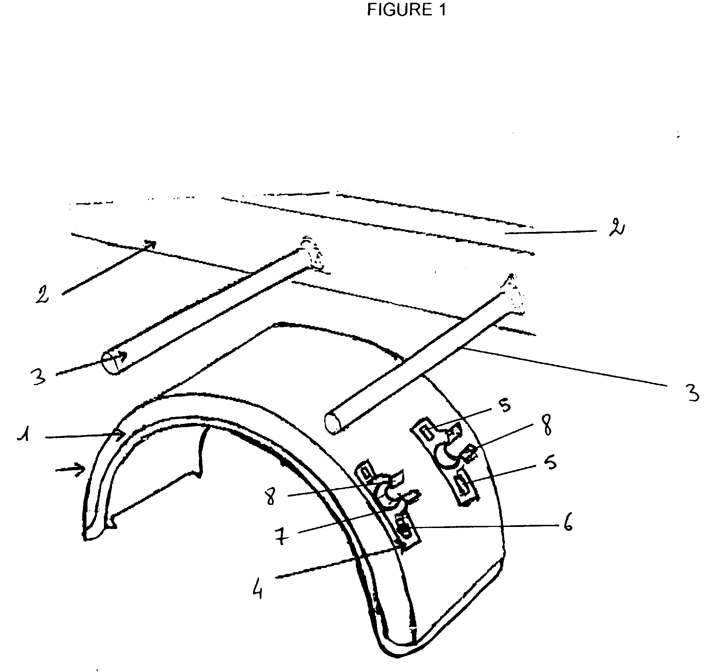

Le dispositif, objet de l'invention, est plus particulièrement destiné à la fixation d'une aile 1 sur le châssis 2 d'un véhicule tracté, tel qu'une remorque, un plateau, une benne, etc. Le châssis 2 de tels véhicules est généralement équipé d'au moins deux organes 3 de support d'aile. Dans l'exemple représenté à la figure 1, ces organes 3 de support d'aile affectent la forme de tubes de section circulaire, ces tubes étant disposés transversalement aux longerons du châssis, en l'occurrence perpendiculairement à ce dernier et s'étendant au-dessus, ou au voisinage, de la roue du véhicule. Bien évidemment le véhicule tracté dispose en général d'une paire d'organes 3 de support d'aile par roue. D'autres modes de réalisation de cet organe 3 de support d'aile peuvent être envisagés, leur conception étant en général du ressort du concepteur de la remorque.

Pour permettre la fixation de l'aile 1 sur le châssis 2 du véhicule, le dispositif comprend au moins une platine 4 agencée pour venir s'appliquer sur la face externe de l'aile 1 comme le montre la figure 1. Cette platine 4 peut s'appliquer avec plus ou moins de jeu sur l'aile. Dans l'exemple représenté aux figures, cette platine 4 est légèrement galbée pour bien épouser le profil de l'aile. Cette platine 4 est munie d'une part de perçages 5 pour le passage d'organes 6 de fixation de la platine 4 à l'aile 1 du véhicule, d'autre part d'une pince 7 à ressort élastique formant clip pour permettre la fixation de la platine à l'organe 3 de support d'aile solidaire du châssis 2. Cette fixation de la platine 4 à l'organe 3 de support d'aile s'effectue par simple déformation élastique de la pince 7 à ressort autour dudit organe 3 du support d'aile.

Les perçages 5 de la platine 4, servant au passage d'organes 6 de fixation de la platine 4 à l'aile, sont de préférence de dimension supérieure à celle nécessaire au passage desdits organes de fixation 6. Ils forment ainsi des lumières de réglage, généralement oblongues, permettant un positionnement relatif réglable de la platine 4 et de l'aile 1, y compris lorsque la platine 4 est fixée à l'organe 3 de support d'aile du châssis 2. Ce réglage de la position de l'aile et de la platine sera décrit plus en détail ci-après.

Ces perçages 5 de la platine 4 peuvent affecter un grand nombre de formes. Généralement, ces perçages comportent sur leur pourtour des moyens 10 de repérage du positionnement des organes 6 de fixation de la platine 4 à l'aile 1. Ces moyens 10 de repérage du positionnement peuvent par exemple être constitués par des graduations disposées sur le pourtour de chaque perçage 5. L'opérateur peut ainsi repérer très rapidement le positionnement de l'organe 6 de fixation de l'une des platines 4 sur l'aile et choisir un positionnement identique pour l'organe 6 de fixation de la platine disposée sur le côté opposé de l'aile. Il est à noter, en effet, qu'en général chaque aile nécessite quatre platines 4 pour sa fixation aux organes 3 de support d'aile.

Bien que le dispositif de fixation puisse être utilisé avec tout type d'aile, de préférence, l'aile destinée à être fixée sur le châssis 2 du véhicule tracté comporte au moins quatre inserts délimitant respectivement un taraudage pour la réception de l'organe 6 de fixation de la platine 4 à l'aile 1. Ces inserts sont généralement insérés dans l'aile 1 lors de la fabrication de cette aile 1. Cette aile 1 est de préférence une pièce moulée réalisée par exemple par rotomoulage.

La pince 7 à ressort qui équipe également la platine 4 comporte quant à elle des branches présentant, à leurs extrémités libres respectives, un guide d'entrée 8 sous forme de pans inclinés à allure divergente en direction de l'entrée de la pince. Ainsi, sous l'action d'une poussée exercée par l'opérateur lors du montage de l'aile sur l'organe 3 de support d'aile, les branches de la pince à ressort s'écartent au passage d'insertion de l'organe 3 support d'aile solidaire du châssis 2 puis se resserrent élastiquement autour dudit organe 3 support d'aile. De ce fait, le montage de la platine 4 sur l'organe 3 de support s'effectue très rapidement par simple déformation élastique. Ce montage ne nécessite aucune fixation d'organe au cours de cette procédure, c'est pourquoi la présence d'un deuxième opérateur ne devient plus nécessaire. Enfin, grâce à ce procédé, les temps de montage sont largement réduits.

Bien que la pince 7 élastique à ressort puisse affecter un grand nombre de formes, dans les exemples représentés, elle affecte une forme d'oméga. De même, cette pince 7 élastique à ressort peut être constituée par une pièce rapportée sur la platine 4 ou peut, comme le montrent les exemples, constituer avec la platine 4 une pièce monobloc de préférence en matière synthétique moulée.

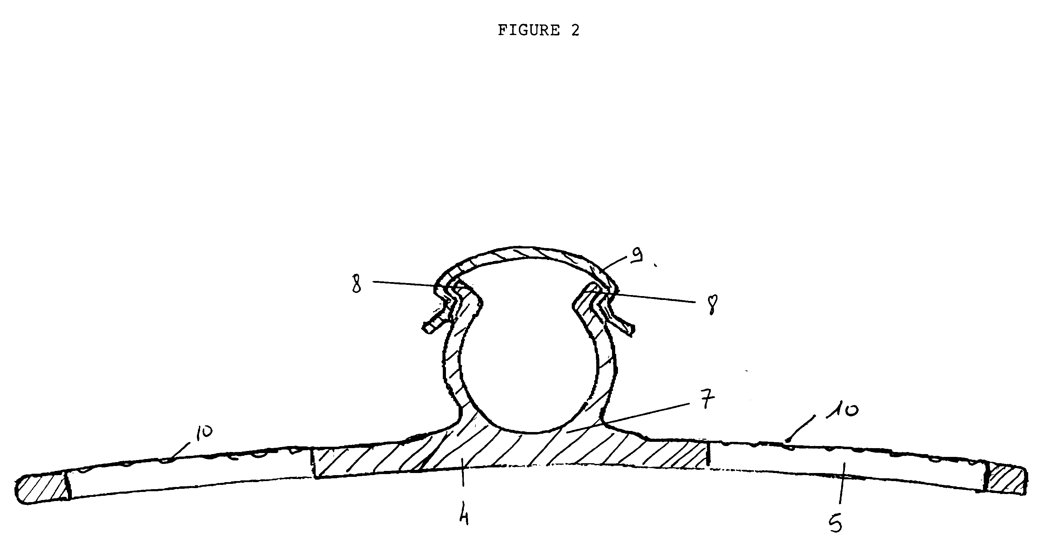

Une fois la pince 7 à ressort positionnée autour dudit organe 3 support d'aile, il est nécessaire d'empêcher tout démontage intempestif de la platine 4 par ouverture de cette pince. Pour ce faire, les portions de branches de la pince 7 formant guide d'entrée 8 sont réunies entre elles au moyen d'une agrafe 9 fixée à la pince 7 par simple déformation élastique. Cette agrafe 9 permet d'empêcher tout démontage intempestif de ladite platine 4 de l'organe 3 de support d'aile. Cette agrafe est représentée à la figure 2.

Généralement, la technique de montage d'une aile 1 sur un châssis 2 d'un véhicule tracté au moyen du dispositif de fixation tel que décrit ci-dessus est la suivante : les platines 4 sont d'abord fixées sur chaque organe 3 de support d'aile par déformation élastique. En conséquence, cette fixation s'effectue de manière très rapide. Une fois ces platines 4 fixées sur l'organe 3 de support d'aile, l'aile munie d'inserts délimitant respectivement un taraudage est amenée au voisinage d'une paire de platines 4, portée par un organe 3 de support d'aile. Des vis sont introduites par le dessus de l'aile à travers les perçages 5 de la platine 4 puis dans le taraudage de l'aile. Une fois la vis en prise avec le taraudage, on procède de la même manière de l'autre côté de l'aile. Par la suite, il est possible de régler, en fonction de l'écartement des organes 3 de support d'aile d'une part, et du positionnement de la roue d'autre part, le positionnement relatif de l'aile 1 par rapport aux organes 3 de support. Pour ce faire, il suffit de déplacer l'aile 1, équipée des organes de fixation 6, par rapport à la platine 4, fixée sur l'organe de support 3. Ce déplacement est rendu possible grâce à la forme des perçages 5 qui, de par leur forme oblongue, permettent ce déplacement. Une fois que l'aile 1 est bien positionnée, l'opérateur visse de manière définitive les organes de fixation 6, assurant ainsi une immobilisation de l'aile 1 par rapport aux organes 3 de support d'aile. Un tel montage est verrouillé par la pose ultérieure d'agrafes 9.

Grâce à un tel dispositif de fixation, les temps de montage d'une aile sur un organe de support d'aile solidaire d'un châssis sont réduits en dépit d'un faible encombrement du dispositif. En outre, un tel dispositif peut être adapté sur plusieurs modèles d'aile.

## Revendications

1. Dispositif pour la fixation d'une aile (1) sur le châssis (2) d'un véhicule, de préférence tracté, tel qu'une remorque, ce châssis (2) étant équipé d'au moins deux organes (3) de support d'aile, tels que des tubes disposés transversalement aux longerons du châssis et s'étendant au-dessus, ou au voisinage, de la roue du véhicule,
caractérisé en ce qu'il comprend au moins une platine (4) apte à s'appliquer sur la face externe de l'aile (1), cette platine étant munie d'une part de perçage(s) (5) pour le passage d'organes (6), tels que des vis, de fixation de la platine (4) à l'aile (1) du véhicule, d'autre part d'une pince (7) à ressort élastique formant clip agencée pour permettre la fixation de la platine (4) à l'organe (3) de support d'aile solidaire du châssis (2) par simple déformation élastique autour dudit organe (3) de support d'aile.

2. Dispositif selon la revendication 1,
caractérisé en ce que la pince (7) à ressort de la platine (4) comporte des branches présentant, à leurs extrémités libres respectives, un guide d'entrée (8) sous forme de pans inclinés à allure divergente vers l'entrée de la pince de manière à ce que, sous l'action d'une poussée, les branches s'écartent au passage d'insertion de l'organe (3) support d'aile solidaire du châssis (2) et se resserrent élastiquement autour dudit organe (3) support d'aile.

3. Dispositif selon la revendication 2,
caractérisé en ce que les portions de branches de la pince (7) formant guide d'entrée (8) sont réunies entre elles au moyen d'une agrafe (9) fixée à ladite pince (7) par simple déformation élastique de manière à empêcher tout démontage intempestif de ladite platine (4) de l'organe (3) de support d'aile.

4. Dispositif selon l'une des revendication 1 à 3,
caractérisé en ce que la pince (7) élastique à ressort est en forme d'oméga.

5. Dispositif selon l'une des revendications 1 à 4,
caractérisé en ce que les perçages (5) de la platine (4) sont de dimension supérieure à celle nécessaire au passage des organes de fixation (6) pour former des lumières de réglage, généralement oblongues, permettant un positionnement relatif réglable de la platine (4) et de l'aile (1), y compris lorsque la platine (4) est fixée à l'organe (3) de support d'aile du châssis (2).

6. Dispositif selon l'une des revendications 1 à 5,
caractérisé en ce que les perçages (5) de la platine (4) comportent des moyens (10) de repérage du positionnement des organes (6) de fixation de la platine (4) à l'aile (1).

7. Dispositif selon l'une des revendications 1 à 6,
caractérisé en ce que la platine (4) et la pince (7) élastique à ressort constituent une pièce monobloc, de préférence en matière synthétique moulée.

8. Aile (1) destinée à être fixée à un châssis (2) d'un véhicule de préférence tracté, tel qu'une remorque, au moyen d'un dispositif de fixation selon l'une des revendications 1 à 7,
caractérisée en ce qu'elle comporte au moins quatre inserts délimitant respectivement un taraudage pour la réception d'un organe (6) de fixation de la platine (4) à l'aile (1).

9. Procédé de montage d'une aile (1) conforme à la revendication 8 sur un châssis (2) d'un véhicule tracté, tel qu'une remorque, au moyen d'un dispositif de fixation selon l'un des revendication 1 à 7,
caractérisé en ce qu'on fixe par déformation élastique au moins une platine (4) sur chaque organe (3) de support d'aile solidaire du châssis (2), puis on solidarise l'aile (1) à chaque platine (4) par vissage.
